# EUROPÄISCHE PATENTSCHRIFT

(11) **EP 2 497 991 B1**
(45) Veröffentlichungstag und Bekanntmachung des Hinweises auf die Patenterteilung: **12.06.2013**
(21) Anmeldenummer: 12158156.5
(22) Anmeldetag: 06.03.2012
(51) Int. Cl.: F16L 33/22

(54) **Verbindungsanordnung**
Connection assembly
Dispositif de raccordement

(30) Priorität: 08.03.2011 DE 102011005220
(43) Veröffentlichungstag der Anmeldung: 12.09.2012
(73) Patentinhaber: Fränkische Industrial Pipes GmbH & Co. KG, 97486 Königsberg (DE)
(72) Erfinder: Schröter, Sören, 96103 Hallstadt (DE)
(74) Vertreter: Herzog, Markus

(56) Entgegenhaltungen:
- DE-A1- 10 158 114
- DE-A1-102008 013 565

## Beschreibung

Die Erfindung betrifft eine Verbindungsanordnung, vorzugsweise für Fluidleitungen in Fahrzeugen, umfassend wenigstens ein Rohr, in dessen äußerer Umfangsfläche wenigstens eine Umfangsnut ausgebildet ist, wobei das Rohr vorzugsweise ein Wellrohr ist, ein von dem Rohr gesondert ausgebildetes Verbindungsstück, das einen im Wesentlichen hohlzylindrischen Abschnitt umfasst, der in das Rohr einführbar ist, wobei sich eine an der Außenumfangsfläche des Verbindungsstücks ausgebildete Ringschulter stets außerhalb des Rohrs befindet, eine innere Hülse, die das Rohr umgibt und mit einem radial nach innen abstehenden Vorsprung einstückig ausgebildet ist, der in die wenigstens eine Umfangsnut des Rohrs eingreift, und eine von dem Rohr, dem Verbindungsstück und der inneren Hülse gesondert ausgebildete äußere Hülse, die die innere Hülse umgibt, an dieser in axialer Richtung gesichert ist und den Vorsprung gegen unbeabsichtigtes Herausheben aus der wenigstens einen Umfangsnut sichert.

Mehrstückige Verbindungsanordnungen werden beispielsweise im Automobilbereich dazu eingesetzt, eine leckage- und störungsfreie Überführung von Flüssigkeiten und Gasen von einem Rohr zu einem zweiten Rohr oder einem anderen Bauteil zu ermöglichen, etwa in Vorrichtungen zur Belüftung von Fahrzeuginnenräumen oder in Scheibenwaschanlagen. Sie werden jedoch auch auf anderen technischen Gebieten und beispielsweise in Vorrichtungen zur Führung oder zum Schutz von Kabeln oder Leitungen eingesetzt.

Eine gattungsgemäße Verbindungsanordnung ist beispielsweise aus der DE 101 58 114 A1 bekannt. Bei dieser Verbindungsanordnung muss zur Herstellung der Verbindung von Rohr und Verbindungsstück zunächst die äußere Hülse auf das Rohr aufgeschoben und anschließend das Rohr auf einen Ansatzstutzen des Verbindungsstücks aufgeschoben werden. Schließlich wird die äußere Hülse auf die innere Hülse des Verbindungsstück aufgeschoben, wobei ein radial nach innen abstehender Vorsprung der inneren Hülse von außen mit dem Rohr in Eingriff gebracht wird. In diesem Zustand wird die äußere Hülse unter Ausnutzung der Elastizität ihres Materials reibschlüssig auf der inneren Hülse gehalten. Nachteilig an der bekannten Verbindungsanordnung ist vor allem, dass die äußere Hülse in dem Zeitraum zwischen dem Lösen und dem erneuten Verbinden der Verbindungsanordnung, beispielsweise bei einer Wartung, Reparatur oder dergleichen, ohne Weiteres von dem Rohr abrutschen und verloren gehen kann.

Zum Stand der Technik wird ferner auf die DE 199 43 764 A1 verwiesen, bei der die vorstehend genannten Nachteile in gleicher Weise bestehen.

Der Vollständigkeit halber sei außerdem noch auf die WO 2005/057072 A1 hingewiesen.

Demgegenüber ist es Aufgabe der vorliegenden Erfindung, eine im Hinblick auf ihre Betriebssicherheit verbesserte Verbindungsanordnung bereitzustellen.

Diese Aufgabe wird erfindungsgemäß durch eine Verbindungsanordnung der eingangs genannten Art gelöst, bei welcher die innere Hülse als von dem Verbindungsstück und dem Rohr gesondertes Element ausgebildet ist und ferner mit der inneren Hülse oder/und der äußeren Hülse zusammenwirkende Rastmittel vorgesehen sind, die die Ringschulter des Verbindungsstücks auf der von dem Rohr abgewandten Seite hintergreifen. Durch die von dem Verbindungsstück gesonderte Ausbildung der inneren Hülse kann diese nach dem Lösen der Verbindungsanordnung zusammen mit der äußeren Hülse eine vormontierte Verbindungsunteranordnung bilden, welche durch die jeweiligen relativen Eingriffe verlustgesichert an dem Rohr verbleiben kann. Ferner kann der Verbindungseingriff dieser Verbindungsunteranordnung mit der von dem Verbindungsstück gebildeten weiteren Verbindungsunteranordnung durch die Rastmittel gesichert werden, so dass beispielsweise ein leckagefreies Führen von Fluid über die Verbindungsanordnung hinweg gewährleistet werden kann.

Die Komponenten der Verbindungsanordnung können im Hinblick auf die Fertigungskosten oder auch die Widerstandsfähigkeit gegenüber von außen auf sie einwirkenden mechanischen Belastungen einfache geometrische Grundformen aufweisen. Beispielsweise kann bzw. können das Verbindungsstück oder/und die äußere Hülse oder/und die innere Hülse im Wesentlichen hohlzylindrisch ausgebildet. Ferner kann wenigstens eine dieser Komponenten aus Kunststoff gefertigt sein, beispielsweise als Spritzgussteil.

Insbesondere zur Erhöhung der Widerstandsfähigkeit gegenüber äußeren Einflüssen ist es vorteilhaft, wenn sich die innere Hülse oder/und die äußere Hülse zumindest abschnittsweise durchgehend über den gesamten Umfang erstreckt bzw. erstrecken, denn durch diese Ausbildung kann die jeweilige Hülse mit robusten, weil in sich geschlossenen Ringabschnitte versehen werden.

In Weiterbildung der Erfindung wird vorgeschlagen, dass der Vorsprung am freien Ende einer Lasche angeordnet ist, die vorzugsweise in einem Fenster der inneren Hülse aufgenommen ist. Gegen die Eigenelastizität der Lasche kann der Vorsprung nach radial außen in eine aufgeweitete Position verstellt werden, die das Einführen des Rohrs ermöglicht. Hat das Rohr eine Stellung erreicht, in der seine Umfangsnut dem Vorsprung gegenüberliegt, so kann der Vorsprung in seine entspannte, radial innere Position zurückkehren, in der er in die Umfangsnut des Rohrs eingreift und die innere Hülse am Rohr sichert. Um die Überführung des Vorsprungs in die aufgeweitete Position aus der Einführbewegung des Rohrs ableiten zu können, kann an dem Vorsprung aber auch eine zum Zusammenwirken mit einem vorauslaufenden Ende des Rohrs bestimmte Einweisungsschräge vorgesehen sein. Zusätzlich oder alternativ kann das freie Ende der Lasche das einer Einführöffnung der inneren Hülse abgewandte Ende der Lasche sein. Die Einführöffnung ist dabei jene Öffnung der inneren Hülse, durch welche das Rohr in die innere Hülse einführbar ist. Das mit der inneren Hülse verbundene Ende der Lasche kann unabhängig von der Orientierung der Lasche zur Erzielung einer stabilen Anordnung vorzugsweise mit einem über den gesamten Umfang der inneren Hülse durchgehenden Ringabschnitt der inneren Hülse verbunden sein. Schließlich kann das Maß der Eigenelastizität der Lasche durch entsprechende Wahl des Laschenmaterials bestimmt werden.

Um die Leckagesicherheit der Verbindungsanordnung verbessern zu können, kann zwischen dem im Wesentlichen hohlzylindrischen Abschnitt des Verbindungsstücks und dem Rohr vorteilhafterweise eine Dichtungshülse vorgesehen sein. Falls das Rohr ein Wellrohr ist, kann die Dichtungshülse vorzugsweise ebenfalls gewellt ausgebildet sein, wobei die Periode der Wellung der Dichtungshülse vorteilhafterweise gleich jener des Rohrs ist. Zudem kann die Dichtungshülse an ihrem aus dem Rohr herausstehenden axialen Ende einen Ringflansch aufweisen, der insbesondere in axialer Richtung als Pufferelement zwischen dem Rohr und der Ringschulter des Verbindungsstücks wirken kann.

In Weiterbildung der Erfindung wird vorgeschlagen, dass die äußere Hülse an einem ihrer Längsenden einen radial nach innen abstehenden Flansch aufweist, der eine Öffnung umgrenzt, die ein Einführen der Ringschulter des Verbindungsstücks erlaubt, ein Einführen eines Kopfteils des Verbindungsstücks jedoch verhindert. Auf diese Weise kann in axialer Richtung eine geeignete Positionierung des Verbindungsstücks relativ zu den übrigen Komponenten der Verbindungsanordnung und insbesondere relativ zur äußeren Hülse erreicht werden.

Gemäß einer ersten alternativen Ausführungsvariante kann es vorteilhaft sein, wenn die Rastmittel wenigstens eine an der inneren Hülse einstückig angeformte Rastnase umfassen. Durch die einstückige Ausbildung kann die Anzahl der für die Verbindungsanordnung erforderlichen Komponenten gering gehalten werden. Die Rastnase kann vorzugsweise dazu ausgebildet sein, im montierten Zustand der Verbindungsanordnung die Ringschulter des Verbindungsstücks, vorzugsweise an deren rohrabgewandter Seite, so zu hintergreifen, dass das Verbindungsstück in axialer Richtung formschlüssig an der inneren Hülse gehalten ist. Darüber hinaus können die Rastmittel mit wenigstens einer Einweisungsschräge ausgestattet sein, die ein Einführen des Verbindungsstücks in die innere Hülse erleichtert.

Um die Montage und Demontage der Verbindungsanordnung gemäß dieser ersten Ausführungsalternative vereinfachen zu können, kann die wenigstens eine Rastnase mit einem Basiskörper der inneren Hülse über einen elastisch verformbaren Steg verbunden sein, dessen elastische Verformbarkeit grundsätzlich beliebig oft ein Einrasten bzw. Lösen der Rastnase ermöglicht. Dabei ist der Axialsteg vorzugsweise derart ausgebildet, dass die Rastnase in eine dem Hintergreifen der Ringschulter entsprechende Stellung vorgespannt ist.

Ferner kann wenigstens ein Drückerelement mit der wenigstens einen Rastnase über wenigstens einen Umfangssteg verbunden sein, der derart ausgebildet und angeordnet ist, dass ein radiales Einwärtsdrücken des wenigstens einen Drückerelements eine radiale Auswärtsbewegung der wenigstens einen Rastnase bewirkt. Dadurch kann erreicht werden, dass - von dem montierten Zustand der Verbindungsanordnung ausgehend - durch Betätigen, das heißt radiales Einwärtsdrücken, des wenigstens einen Drückerelements sich die wenigstens eine Rastnase radial nach außen verlagert, so dass die formschlüssige Verbindung von Verbindungsstück und innerer Hülse gelöst wird.

In Weiterbildung dieser Ausgestaltung kann das wenigstens eine Drückerelement durch ein zugeordnetes Fenster der äußeren Hülse aus dieser herausragen. Eine solche Ausgestaltung ermöglicht eine gute Zugänglichkeit des wenigstens einen Drückerelements für einen Benutzer und ein Betätigen des Drückerelements beispielsweise auch dann, wenn die Verbindungsanordnung bzw. das Drückerelement nicht einsehbar ist. Zudem können die wenigstens eine Rastnase und der wenigstens eine Umfangssteg vor äußeren, insbesondere mechanischen Einflüssen geschützt werden, sowie eine haptisch und optisch ansprechende Ausgestaltung des Drückerelements ermöglicht werden.

Gemäß einer zweiten alternativen Ausführungsvariante können die Rastmittel wenigstens einen an einem gesonderten Halteelement ausgebildeten Haltevorsprung umfassen, der vorzugsweise dazu ausgebildet ist, im montierten Zustand der Verbindungsanordnung die Ringschulter des Verbindungsstücks so zu hintergreifen, dass das Verbindungsstück an einem Herausfallen aus dem Rohr gehindert ist. Diese zweite alternative Ausführungsvariante weist zwar eine Komponente mehr auf als die vorstehend diskutierte erste Ausführungsvariante, sie hat jedoch den Vorteil, dass die Rastmittel insgesamt mechanisch robuster ausgebildet sein können.

Vorteilhafterweise kann das Halteelement in axialer Richtung einen ersten, im Wesentlichen starren Abschnitt aufweisen, der mit dem Verbindungsstück formschlüssig in Eingriff tritt und den wenigstens einen Haltevorsprung trägt, sowie einen zweiten, als Federelement ausgebildeten Abschnitt, der der Sicherung des Halteelements an der äußeren Hülse dient. Durch die Starrheit des den wenigstens einen Haltevorsprung tragenden Abschnitts kann dieser robust, insbesondere mechanisch robust, ausgebildet sein, und so im montierten Zustand der Verbindungsanordnung ein unerwünschtes Lösen des Verbindungsstücks von der übrigen Verbindungsanordnung zuverlässig verhindern. Darüber hinaus gewährleistet der als Federelement ausgebildete Abschnitt den sicheren Halt des Halteelements an der äußeren Hülse. Ferner wird durch die Ausgestaltung des zweiten Abschnitts des Halteelements als Federelement eine schnelle, einfache und grundsätzlich beliebig oft wiederholbare Montage bzw. Demontage des Halteelements an bzw. von der äußeren Hülse ermöglicht.

In Weiterbildung der zweiten alternativen Ausführungsvariante kann die äußere Hülse ein erstes Fenster aufweisen, durch welches das Halteelement mit seinen Seitenstegen, vorzugsweise des als Federelement ausgebildeten Abschnitts des Halteelements, voran eingesetzt ist, sowie wenigstens ein zweites Fenster, aus welchem bzw. welchen die Enden der Seitenstege des Halteelements wieder heraustreten. Gemäß einer ersten Ausgestaltung kann das Halteelement eine im Wesentlichen U-förmige Gestalt aufweisen. Bei dieser Ausgestaltung können zwei zweite Fenster vorgesehen sein, wobei durch jedes der zweiten Fenster jeweils ein freies Ende eines der Seitenstege heraustritt. Gemäß einer zweiten Ausgestaltung ist es aber auch möglich, dass das Halteelement eine im Wesentlichen rechteckförmige Gestalt aufweist. Bei dieser Ausgestaltung ist bevorzugt lediglich ein zweites Fenster vorhanden, und treten die durch einen Verbindungssteg miteinander verbundenen Enden der Seitenstege gemeinsam durch dieses eine zweite Fenster heraus.

Um im montierten Zustand der Verbindungsanordnung den Eingriff zwischen dem Halteelement und dem Verbindungsstück sichern zu können, kann vorgesehen sein, dass an den beiden Seitenstegen nach innen abstehende Mittel vorgesehen sind, mittels derer das Halteelement wenigstens einen Vorsprung der äußeren Hülse hintergreift. Bei der ersten Ausgestaltung kann der wenigstens eine Vorsprung der äußeren Hülse ein die beiden zweiten Fenster voneinander trennender Steg der äußeren Hülse sein, und können die nach innen abstehenden Mittel von nach innen, d.h. im Wesentlichen in Querrichtung der äußeren Hülse, abstehenden Ansätzen der Seitenstege gebildet sein. Um den die zweiten Fenster trennenden Steg hintergreifen zu können, werden die Seitenstege vorzugsweise im Wesentlichen in Querrichtung der äußeren Hülse federelastisch verformt. Bei der zweiten Ausgestaltung kann von der äußeren Hülse wenigstens ein Vorsprung in axialer Richtung abstehen, und können die nach innen abstehenden Mittel der Seitenstege von dem diese verbindenden Verbindungssteg gebildet sein. Um den wenigstens einen Vorsprung hintergreifen zu können, werden die Seitenstege vorzugsweise im Wesentlichen in axialer Richtung der äußeren Hülse federelastisch verformt.

Ferner ist es vorteilhaft, wenn an den beiden Seitenstegen jeweils ein äußerer Ansatz vorgesehen ist, der ein unbeabsichtigtes Lösen des Halteelements aus der äußeren Hülse verhindert. Bei der ersten Ausgestaltung können die äußeren Ansätze dabei mit dem ersten Fenster benachbarten Begrenzungsflächen der beiden anderen Fenster zusammenwirken, während sie bei der zweiten Ausgestaltung hierzu mit Axialstegen der inneren Hülse zusammenwirken.

Um ein unbeabsichtigtes Verkippen des Halteelements relativ zur äußeren Hülse verhindern zu können, wird vorgeschlagen, dass an der äußeren Hülse und am Halteelement zusammenwirkende Führungsmittel vorgesehen sind, welche sich vorzugsweise in einer sowohl zur Querrichtung als auch zur Axialrichtung der äußeren Hülse im Wesentlichen orthogonal verlaufenden Richtung erstrecken.

Nach dem Einsetzen der Dichtungshülse in das Rohr, dem anschließenden Verbinden des Rohrs mit der inneren Hülse und schließlich dem Verbinden von innerer und äußerer Hülse kann das Haltelement zur Bereitstellung eines vormontierten Zustands unter Ausnutzung der Federelastizität der beiden Seitenstege des als Federelement ausgebildeten Abschnitts des Halteelements in das erste Fenster eingeführt werden, bis sich sich beiden Seitenstege wieder entspannen und die Enden der Seitenstege in das wenigstens eine zweite Fenster eingreifen. In diesem vormontierten Zustand ist um die Längsachse der Verbindungsanordnung herum zwischen den beiden Seitenschenkel so viel Platz, dass der hohlzylindrische Abschnitt des Verbindungsstücks nicht aber dessen Ringschulter an dem Halteelement vorbeibewegt werden kann. Liegt das Verbindungsstück mit seiner Ringschulter an den Seitenstegen des Halteelements an, so führt man das Halteelement weiter in das erste Fenster ein, bis der Haltevorsprung des Halteelements die Ringschulter hintergreift und das Halteelement mittels der nach innen abstehenden Mittel der Seitenstege den wenigstens einen Vorsprung der äußeren Hülse hintergreift.

Zum Lösen der Verbindungsanordnung verformt man die beiden Seitenschenkel entgegen ihrer Eigenelastizität bis dieser Hintergriff wieder gelöst ist, und schiebt das Halteelement in die äußere Hülse hinein, bis sein Haltevorsprung die Ringschulter des Verbindungsstücks wieder freigibt.

Nachzutragen ist noch, dass das erste Fenster und das wenigstens eine zweite Fenster vorzugsweise zu einer vorzugsweise durch die Längsachse der Verbindungsanordnung verlaufenden Ebene spiegelsymmetrisch ausgebildet sein können. Im Fall der ersten Ausgestaltung sind die beiden zweiten Fenster vorzugsweise auf verschiedenen Seiten der Spiegelebene ausgebildet, während der sie trennende Steg und das erste Fenster von der Spiegelebene durchsetzt werden und das erste Fenster dem die beiden anderen Fenster voneinander trennenden Steg radial gegenüberliegt. Im Fall der zweiten Ausgestaltung werden das erste Fenster und das zweite Fenster beide von der Spiegelebene durchsetzt und liegen einander radial diametral gegenüber. In beiden Ausgestaltungen weist auch das Halteelement diese Spiegelsymmetrie auf.

Grundsätzlich ist es jedoch auch denkbar, von dieser Spiegelsymmetrie abzuweichen, beispielsweise indem man lediglich einen der Seitenstege federelastisch ausbildet und gewünschtenfalls mit einem inneren Ansatz oder/und einem äußeren Ansatz ausbildet.

Zu beiden alternativen Ausführungsvarianten ist ferner nachzutragen, dass die innere Hülse und die äußere Hülse dadurch aneinander gehalten werden können, dass an einem der Teile, innere Hülse oder äußeren Hülse, eine Ringrippe vorgesehen ist, insbesondere einstückig angeformt ist, welche mit einer Umfangsnut des jeweils anderen Teils, äußere Hülse oder innere Hülse, zusammenwirkt. Es ist jedoch auch möglich, an wenigstens einer Lasche der inneren Hülse, deren innerer Vorsprung die Verbindung zum Rohr oder/und einem dieses umgebenden Schutzschlauch herstellt, ferner einen äußeren Vorsprung vorzusehen, der als Rastvorsprung in eine entsprechende Rastöffnung oder Rastvertiefung der äußeren Hülse eingreift.

Zu dem vorstehend angesprochenen Schutzschlauch, der das Rohr optional umgeben kann, ist noch nachzutragen, dass dieser beispielweise als Abrasionsschutz, als Schutz gegen radiale Ausdehnung durch Berstdruck sowie als Schutz gegen Ausdehnung in Längsrichtung der Rohrverbindungsanordnung parallel zur Zylinderachse der Rohrverbindungsvorrichtung, zur thermischen Isolierung sowie zur Verstärkung des Rohrs dienen kann. Er kann beispielsweise von einem Gewebe- und/oder Geflechtschlauch oder einem Schlauchtyp gebildet sein, dessen Mantelfläche herstellungsbedingt oder nachträglich eine Mehrzahl von Öffnungen aufweist.

Bei der ersten alternativen Ausführungsvariante kommt hinzu, dass in einer Weiterbildung dieser Ausführungsvariante ein mit der inneren Hülse einstückig verbundenes Drückerelement durch ein zugeordnetes Fenster der äußeren Hülse herausragen kann, was einen formschlüssigen Eingriff der beiden Hülsen in Achsrichtung der Verbindungsanordnung bereitstellt.

Die Erfindung wird nachfolgend an drei Ausführungsbeispielen anhand der beiliegenden Figuren näher beschrieben werden. Es stellen dar:
- Figur 1: eine perspektivische Explosionsansicht einer ersten Ausführungsform einer erfindungsgemäßen Verbindungsanordnung;
- Figur 2: eine perspektivische Ansicht der Ausführungsform gemäß Figur 1 im endmontierten Zustand;
- Figur 3a: eine erste Schnittansicht der Ausführungsform gemäß Figur 1 im montierten Zustand;
- Figur 3b: eine zweite Schnittansicht der Ausführungsform gemäß Figur 1 im montierten Zustand, deren Schnittebene verglichen mit der Schnittebene der Figur 3a um die Längsachse der Verbindungsanordnung um 90° gedreht ist;
- Figur 4: eine vergrößerte perspektivische Ansicht der inneren Hülse der erfindungsgemäßen Verbindungsanordnung gemäß Figur 1;
- Figur 5: eine Ansicht analog Figur 1 einer zweiten Ausführungsform einer erfindungsgemäßen Verbindungsanordnung;
- Figuren 6, 7a, 7b: Ansichten der zweiten Ausführungsform gemäß Figur 5, welche den Ansichten der Figuren 2, 3a und 3b entsprechen;
- Figuren 8a, 8b: eine Seitenansicht und eine Frontalansicht eines Halteelements der zweiten Ausführungsform gemäß Figur 5;
- Figuren 9a, 9b: zwei orthogonal zur Längsachse der Verbindungsanordnung gemäß Figur 5 genommene Schnittansichten zur Erläuterung des Zusammenwirkens des Halteelements mit der äußeren Hülse.
- Figur 10: eine Ansicht analog Figur 1 einer dritten Ausführungsform einer erfindungsgemäßen Verbindungsanordnung;
- Figuren 11, 12a, 12b: Ansichten der dritten Ausführungsform gemäß Figur 10, welche den Ansichten der Figuren 2, 3a und 3b entsprechen;
- Figur 13: eine Figur 8b entsprechende Frontalansicht eines Halteelements der dritten Ausführungsform gemäß Figur 10;
- Figur 14: eine orthogonal zur Längsachse der äußeren Hülse gemäß der dritten Ausführungsform genommene Schnittansicht;
- Figur 15: eine orthogonal zur Längsachse der Verbindungsanordnung gemäß Figur 10 genommene Schnittansicht, welche Figur 9a entspricht, zur Erläuterung des Zusammenwirkens des Halteelements der dritten Ausführungsform mit der äußeren Hülse.

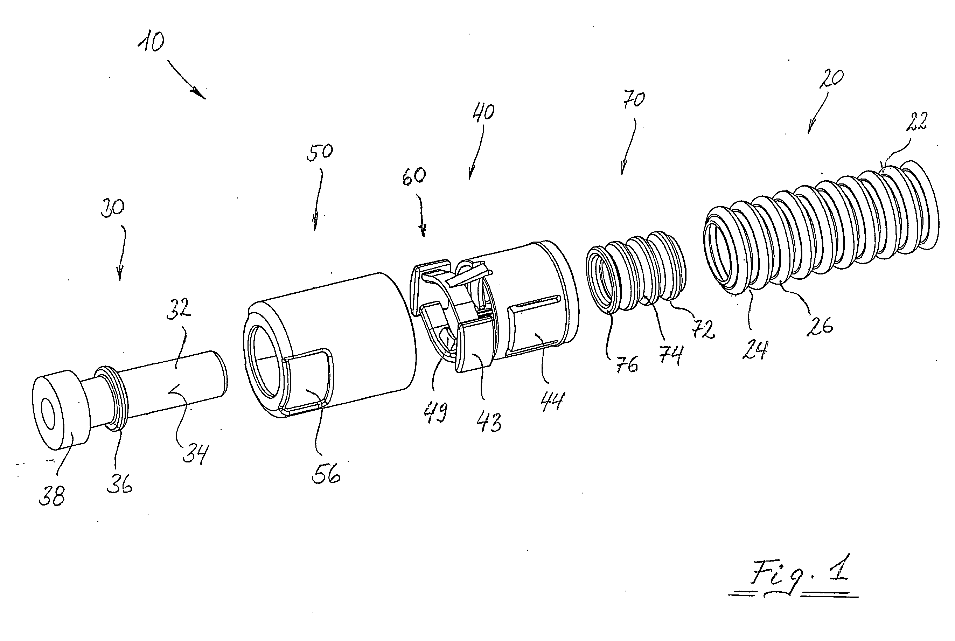

In Figur 1 ist eine erste Ausführungsform der erfindungsgemäßen Verbindungsanordnung ganz allgemein mit 10 bezeichnet. Die Verbindungsanordnung 10 umfasst ein Rohr 20, in dessen äußerer Umfangsfläche 22 wenigstens eine Umfangsnut 24 ausgebildet ist. Im dargestellten Ausführungsbeispiel ist das Rohr 20 ein Wellrohr ist, das eine Mehrzahl von Umfangsnuten 24 aufweist, die von den Wellentälern des Wellrohrs gebildet sind. Die zwischen diesen Wellentälern angeordneten Wellenberge sind in Figur 1 mit 26 bezeichnet. Ferner umfasst die Verbindungsanordnung 10 eine innere Hülse 40, eine äußere Hülse 50, ein Verbindungsstück 30 und vorzugsweise auch eine Dichtungshülse 70.

Das Rohr 20, die innere Hülse 40, die äußere Hülse 50, das Verbindungsstück 30 und gegebenenfalls die Dichtungshülse 70 sind jeweils gesondert ausgebildete Komponenten mit im Wesentlichen hohlzylindrischer Grundgestalt. Die innere Hülse 40, die äußere Hülse 50 und das Verbindungsstück 30 sind vorzugsweise aus einem Kunststoffmaterial gebildete Spritzgussteile, während das Rohr 20 vorzugsweise im Extrusionsverfahren aus Kunststoff hergestellt ist, und die Dichtüngshülse 70 aus einem elastischen Dichtungsmaterial, beispielsweise Gummi, gefertigt ist.

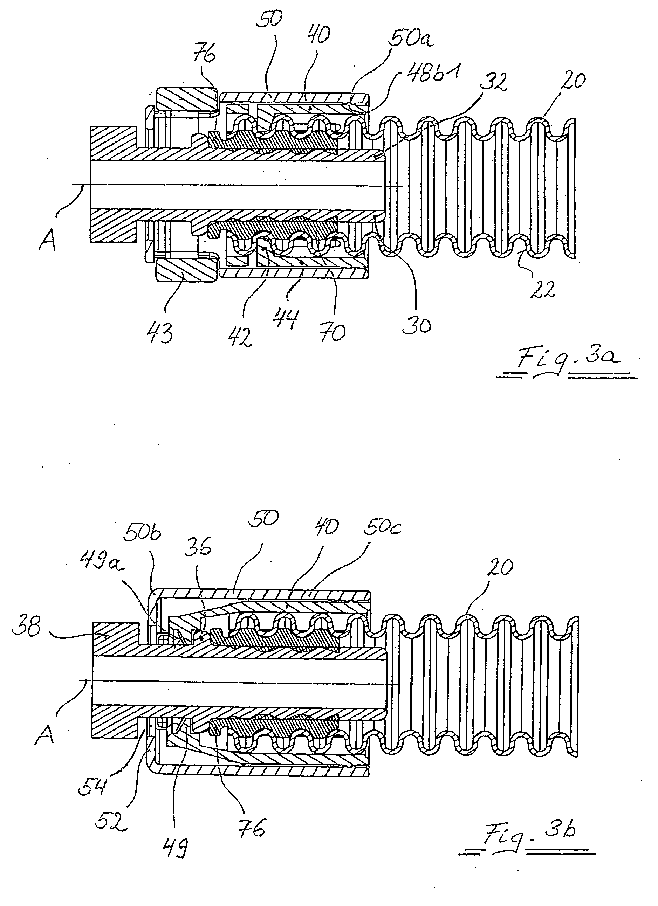

Ist das Rohr 20 ein Wellrohr, so kann die Dichtungshülse 70 ebenfalls gewellt ausgebildet sein, um eine möglichst effektive Dichtung bereitstellen zu können. Dabei ist die Wellung der Dichtungshülse 70 vorzugsweise an jene des Rohrs 20 angepasst, insbesondere können die Periodenlängen der beiden Wellungen im Wesentlichen identisch sein, während die Amplitude der Wellung der Dichtungshülse 70 kleiner sein kann als jene der Wellung des Rohrs 20, jedoch ausreicht, damit sich die Wellenberge 72 der Dichtungshülse 70 dichtend an die Innenumfangsfläche des Rohrs 20 anschmiegen können (siehe Figuren 3a und 3b).

Ferner kann der im Bereich der Wellentäler 74 der Dichtungshülse 70 gemessene Innendurchmesser der Dichtungshülse 70 kleiner sein als der Durchmesser der äußeren Umfangsfläche 34 eines hohlzylindrischen Abschnitts 32 des Verbindungsstücks 30, so dass dieser hohlzylindrische Abschnitt 32 die Dichtungshülse 70 zum Herbeiführen der Dichtungsfunktion beim Einführen in das Rohr 20 komprimieren kann, was in den Figuren 3a und 3b durch die einander überlappenden Bereiche der Schraffuren von Dichtungshülse 70 und Verbindungsstück 20 dargestellt ist.

Schließlich kann die Dichtungshülse 70 an ihrem vom Rohr 20 abgewandten Längsende einen radial nach außen abstehenden Ringflansch 76 aufweisen, der im montierten Zustand der Verbindungsanordnung 10 vorzugsweise aus dem Rohr 20 heraussteht. Vorteilhafterweise reicht die radiale Erstreckung des Ringflansches so weit, dass er im montierten Zustand der Verbindungsanordnung 10 als Pufferelement zwischen dem Rohr 20 und dem Verbindungsstück 30, vorzugsweise einer Ringschulter 36 des Verbindungsstücks dienen kann (siehe Figur 3b).

Hat man das Rohr 20 mit der Dichtungshülse 70 bestückt, so führt man die von diesen beiden Komponenten gebildete Baugruppe in der Darstellung der Figuren 1, 3a und 3b in die innere Hülse 40 ein, bis ein nach radial innen abstehender Vorsprung 42 der inneren Hülse 40 in die Umfangsnut 24 des Rohrs 20, beispielsweise die von dem ersten Wellental des Wellrohrs gebildete Umfangsnut, einrastet (siehe Figur 3a).

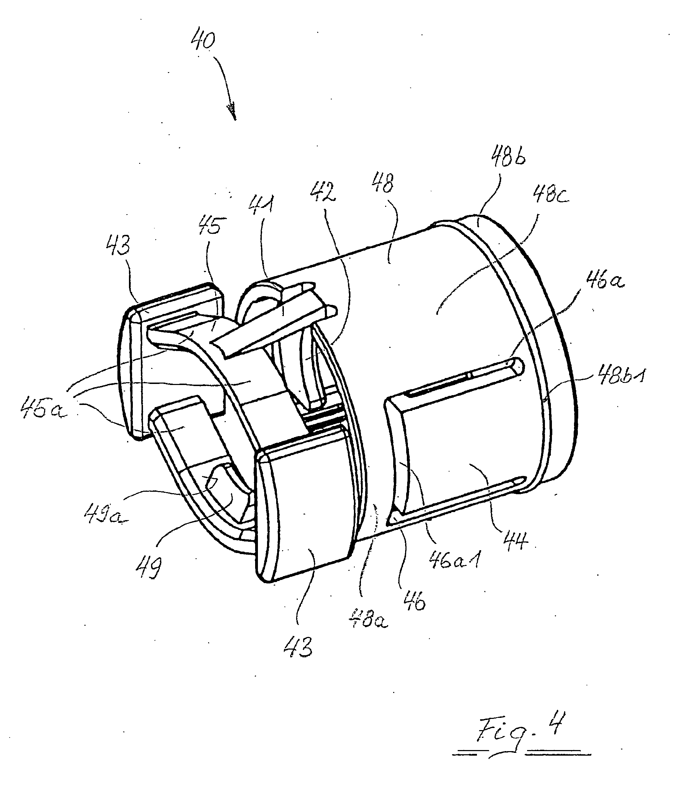

Wie am besten aus Figur 4 zu ersehen ist, verfügt die innere Hülse 40 über einen Basiskörper 48, der im Wesentlichen als Hohlzylinder ausgebildet ist. An seinen beiden Längsenden 48a und 48b weist der Basiskörper 48 vorzugsweise zwei in Umfangsrichtung durchgehende Ringabschnitte auf, während in dem zwischen diesen angeodneten Abschnitt 48c zwei einander diametral gegenüber angeordnete Fenster 46 vorgesehen sind. In jedem dieser Fenster 46 kann eine Lasche 44 vorgesehen sein, deren eines Ende mit dem Ringabschnitt 48b des Basiskörpers 48 verbunden ist und an deren anderem Ende der vorstehend angesprochene nach radial innen abstehende Vorsprung 42 vorgesehen ist. Die Lasche 44 wird von einem im Wesentlichen U-förmigen Schlitz 46a umgrenzt, der das Fenster 46 bildet, wobei der Basissteg 46a1 der U-Form dem Ringabschnitt 48a benachbart angeordnet ist.

Von dem Ringabschnitt 48a des Basiskörpers 48 erstrecken sich mit dem Basiskörper 48 vorzugsweise einstückig ausgebildete elastisch verformbare Axialstege 41 in vom Ringabschnitt 48b abgewandter axialer Richtung. Gemäß Figur 4 können beispielsweise zwei derartige, einander diametral gegenüberliegende Axialstege 41 vorgesehen sein. An dem freien Ende jedes Axialstegs ist jeweils ein sich im Wesentlichen in Umfangsrichtung erstreckender Umfangssteg 45, vorzugsweise einstückig, angeformt. Jeder der Umfangsstege 45 weist zwei Arme 45a auf, die auf einander gegenüber liegenden Seiten des zugehörigen Axialstegs 41 angeordnet sind. Die freien Enden der Arme 45a sind mit einander diametral gegenüber liegenden Drückerelementen 43 verbunden. Dabei kann vorzugsweise jedes Drückerelement 42 mit jeweils einem Arm 45a jedes der Umfangsstege 45 verbunden sein, so dass die Umfangsstege 45 und Drückerelemente 43 um die Längsachse A der Verbindungsanordnung 10 eine ringförmige Anordnung bilden.

Auf der Innenseite der Umfangsstege 45 sind etwa im Bereich von deren Längsmitte, d.h. etwa an einer den Axialstegen 41 entsprechenden Position Rastnasen 49 vorgesehen, die dazu bestimmt sind, im montierten Zustand der Verbindungsanordnung 10 die Ringschulter 36 des Verbindungsstücks 30, vorzugsweise auf deren rohrabgewandter Seite, zu hintergreifen (siehe Fig. 3b) und so die Verbindung des Rohrs 20 mit dem Verbindungsstück 30 zu sichern.

Um bei der Montage der Verbindungsanordnung 10 das Einführen des Verbindungsteils 30 in das Rohr 20 und insbesondere die Bewegung der Ringschulter 36 an den Rastnasen 49 vorbei erleichtern zu können, weisen die Rastnasen 49 vorzugsweise eine von radial außen nach radial innen zum Rohr hin geneigte Einweisungsschräge 49a auf. Infolge der Einweisungsschrägen können die Rastnasen 49 beim Einführen des Verbindungstücks 30 in das Rohr 20 unter Ausnutzung der Eigenelastizität der Umfangsstege 45 der Ringschulter 36 elastisch ausweichen, und fallen aufgrund der hierbei erzeugten Vorspannung der Umfangsstege 45 hinter der Ringschulter 36 wieder radial nach innen, um die Verbindung des Rohrs 20 mit dem Verbindungsstück 30 zu sichern.

Die Drückerelemente 43 dienen dem Lösen der Verbindung des Rohrs 20 mit dem Verbindungsstück 30. Durch ein radiales Einwärtsdrücken der Drückerelemente 43 werden die Umfangsstege 45 elastisch so verformt, dass sich die Rastnasen 49 radial nach außen bewegen und den Eingriff mit der Ringschulter 36 freigeben. In diesem Zustand kann das Verbindungsstück 30 dann aus dem Rohr 20 wieder herausgezogen werden.

Grundsätzlich können die Drückerelemente 43 aber auch zum Erleichtern des Einführens des Verbindungsstücks 30 in das Rohr 20 gedrückt werden. Ja es kann sogar denkbar sein, auf die Einweisungsschrägen 49a zu verzichten und das Drücken der Drückerlemente 43 auch bei der Herstellung der Verbindung von Verbindungsstück 30 und Rohr 20 obligatorisch zu machen.

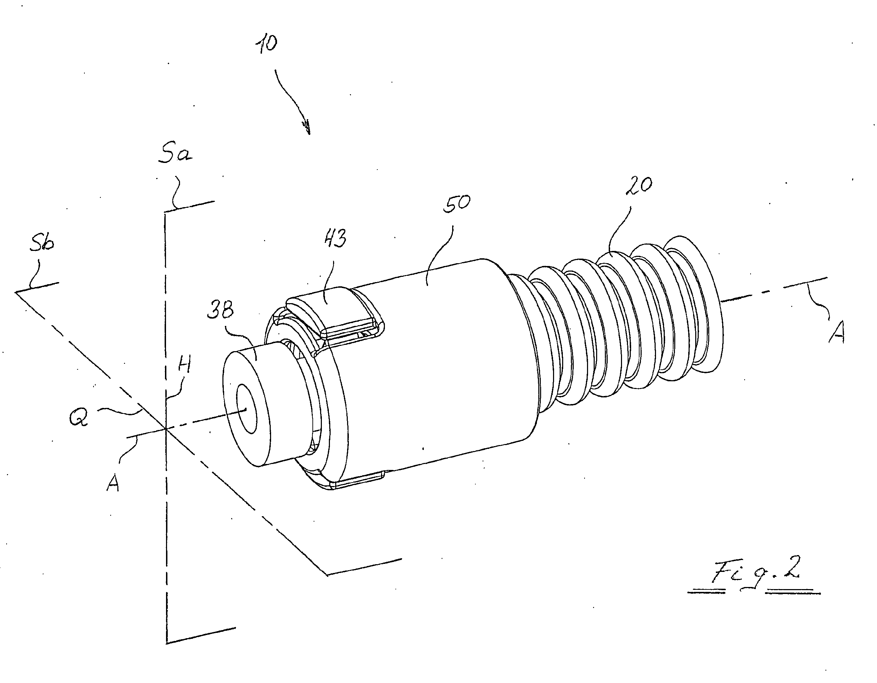

Es ist noch nachzutragen, dass die beiden zueinander diametral angeordneten Rastennasen 49 bezüglich der beiden zueinander ebenfalls diametral angeordneten Vorsprünge 42 jeweils um 90° versetzt angeordnet sind, wie sich aus einem Vergleich der Figuren 3a und 3b unter Berücksichtigung der in Figur 2 angedeuteten Schnittebenen Sa und Sb ergibt.

Nachzutragen ist ferner, dass die innere Hülse 40 mit dem Basiskörper 48, den Laschen 44, den inneren Vorsprüngen 42, den Axialstegen 41, den Umfangsstegen 45, den Drückerelementen 43 und den Rastnasen 49 vorzugsweise einstückig ausgebildet ist, insbesondere aus Kunststoff, und beispielsweise als Spritzgussteil gefertigt.

Wie sich aus der vorstehenden Beschreibung ergibt, würde das Zusammenwirken des Rohrs 20, des Verbindungsstücks 30 mit dazwischen angeordneter Dichtungshülse 70 und mit der inneren Hülse 40 grundsätzlich bereits eine funktionstüchtige Verbindungsanordnung 10 ergeben. Allerdings bestünde bei dieser Anordnung noch die Gefahr, dass die Vorsprünge 42 dann, wenn auf das Rohr 20 und das Verbindungsstück 30 eine ausreichend hohe Kraft im Sinne von deren Trennung ausgeübt wird, in unbeabsichtiger Weise aus der Umfangsnut 24 des Rohrs 20 herausgehoben werden. Um dies verhindern zu können, umfasst die erfindungsgemäße Verbindungsanordnung 10 vorzugsweise ferner eine äußere Hülse 50, die die innere Hülse 40 umgibt und den radialen Eingriff der Vorsprünge 42 in der Umfangsnut 24 sichert.

Da die äußere Hülse 50 keine Verbindungskräfte aufzunehmen braucht, können die Mittel, welche die äußere Hülse 50 in axialer Richtung an der inneren Hülse 40 halten, entsprechend schwach ausgebildet sein. Beispielsweise kann die innere Hülse 40 an ihrer äußeren Umfangsfläche, vorzugsweise an ihrem Ringabschnitt 48b eine sich in Umfangsrichtung erstreckende Rippe 48b1 auf, die mit einer in der inneren Umfangsfläche der äußeren Hülse 50 ausgebildeten Ausnehmung 50a zusammenwirkt. Der Eingriff der Rippe 48b1 mit der Ausnehmung 50a kann unter Ausnutzung der Eigenelastizität von innerer Hülse 40 und äußerer Hülse 50 hergestellt und wieder gelöst werden. Er ist daher eher als reibschlüssig, denn als formschlüssig anzusehen.

Darüber hinaus kann die äußere Hülse 50 an der inneren Hülse 40 aber auch formschlüssig gesichert werden. So durchsetzen die Drückerelemente 43 der inneren Hülse 40 bei der ersten dargestellten Ausführungform Öffnungen 56 der äußeren Hülse 50. Die zur Achsrichtung A im Wesentlichen orthogonal verlaufenden Begrenzungsflächen dieser Öffnungen 56 treten beim Versuch einer Relativverlagerung von innerer Hülse 40 und äußerer Hülse 50 in Anlageeingriff mit den Drückerelementen 43 und verhindern somit formschlüssig die Trennung von innerer Hülse 40 und äußerer Hülse 50.

Die äußere Hülse 50 weist ferner an ihrem vom Rohr 20 abgewandten Längsende 50b einen von der Mantelfläche 50c aus radial nach innen abstehenden Flansch 52 auf, der eine im Wesentlichen kreisrunde Öffnung 54 des im Wesentlichen hohlzylindrischen Körpers der äußeren Hülse 50 umgrenzt. Dabei kann der Innendurchmesser der Öffnung 54 vorzugsweise größer sein als der Außendurchmesser der Ringschulter 36, jedoch kleiner als der Außendurchmesser eines Kopfteils 38 des Verbindungsstücks 30. Somit kann die Ringschulter 36 durch die Öffnung 54 der äußeren Hülse 50 in diese eingeführt werden, während ein Einführen eines Kopfteils 38 in die Öffnung 54 nicht möglich ist.

Erfindungsgemäß können das Rohr 20, die innere Hülse 40, die äußere Hülse und gewünschtenfalls die Dichtungshülse 70 eine Verbindungsunteranordnung bilden, deren Komponenten auch in einem mit dem Verbindungsstück 30 nicht verbundenen Zustand aneinander gesichert sind. Die erfindungsgemäße Verbindungsanordnung 10 ermöglicht somit beliebig oft das Herstellen und Wieder-Lösen der Verbindung von Rohr 20 und Verbindungsstück 30, ohne dass die Gefahr eines Verlustes der einen oder anderen Komponente bestünde.

Figur 2 zeigt die erste Ausführungsform der erfindungsgemäßen Verbindungsanordnung 10 im montierten Zustand. Dabei ist das Verbindungsstück 30 bis auf das Kopfteil 38 in die innere Hülse 40 und die äußere Hülse 50 eingeführt, und die Drückerelemente 43 ragen aus den Öffnungen 56 der äußeren Hülse 50 hervor. Figuren 3a und 3b zeigen zwei zueinander um 90° versetzte Schnittansichten der Verbindungsanordnung 10 im montierten Zustand.

Wie sich aus der vorstehenden Beschreibung und insbesondere auch den Figuren 1 bis 4 ergibt, sind sämtliche Komponenten der Verbindungsanordnung 10 sowohl bezüglich der von der Achsrichtung A und der Hochrichtung H aufgespannten Ebene Sa als auch bezüglich der von der Achsrichtung A und der Querrichtung Q aufgespannten Ebene Sb spiegelsymmetrisch ausgebildet.

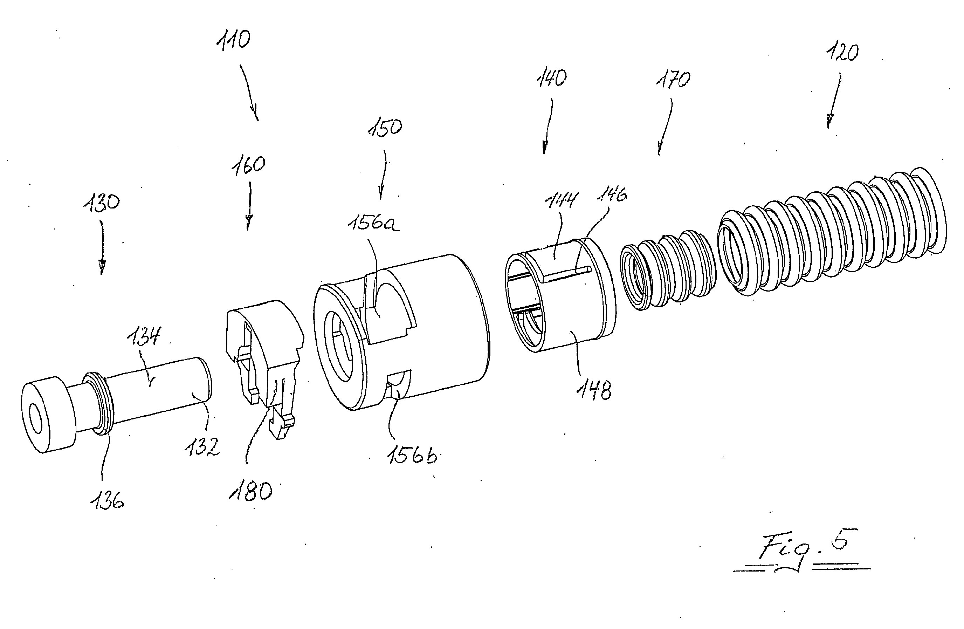

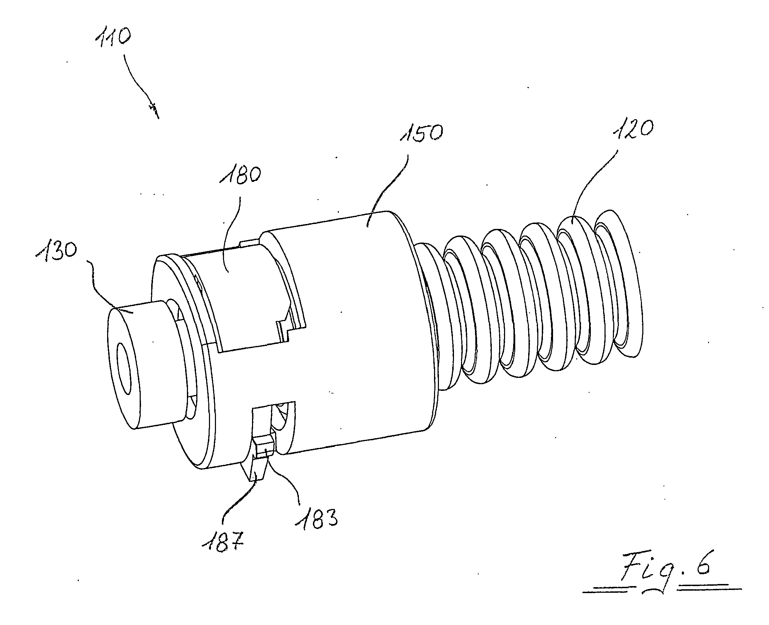

Die Figuren 5 bis 9b zeigen eine zweite Ausführungsform der erfindungsgemäßen Verbindungsanordnung, die im Wesentlichen der Ausführungsform gemäß Figuren 1 bis 4 entspricht. Analoge Teile sind daher mit gleichen Bezugszeichen versehen wie in den Figuren 1 bis 4, jedoch vermehrt um die Zahl 100. Darüber hinaus wird die Verbindungsanordnung 110 gemäß den Figuren 5 bis 9b im folgenden nur insoweit beschrieben werden, als sie sich von der Verbindungsanordnung 10 gemäß den Figuren 1 bis 4 unterscheidet, auf deren Beschreibung ansonsten ausdrücklich verwiesen sei.

Die Verbindungsanordnung 110 gemäß Figuren 5 bis 9b unterscheidet sich von der Verbindungsanordnung 10 gemäß Figuren 1 bis 4 lediglich dadurch, dass die Rastmittel 160, welche für den sicheren Halt des Verbindungsstücks 130 im Rohr 120 verantwortlich sind, als von der inneren Hülse 140 gesondert ausgebildete Komponente, nämlich in Form eines Halteelements 180 ausgebildet sind. Bei der Verbindungsanordnung 10 gemäß Figuren 1 bis 4 waren diese Rastmittel 60 von der Gesamtheit der Axialstege 41, der Umfangsstege 45, der Drückerelemente 43 und der Rastnasen 49 gebildet.

Was die Ausbildung des Rohrs 120, der optional vorgesehenen Dichtungshülse 170, des Verbindungsstücks 130 und des Basiskörpers 148 der inneren Hülse 140 nebst den Fenstern 146 und den darin angeordneten Laschen 144 anbelangt, sei auf die Beschreibung der Verbindungsanordnung 10 gemäß Figuren 1 bis 4 verwiesen.

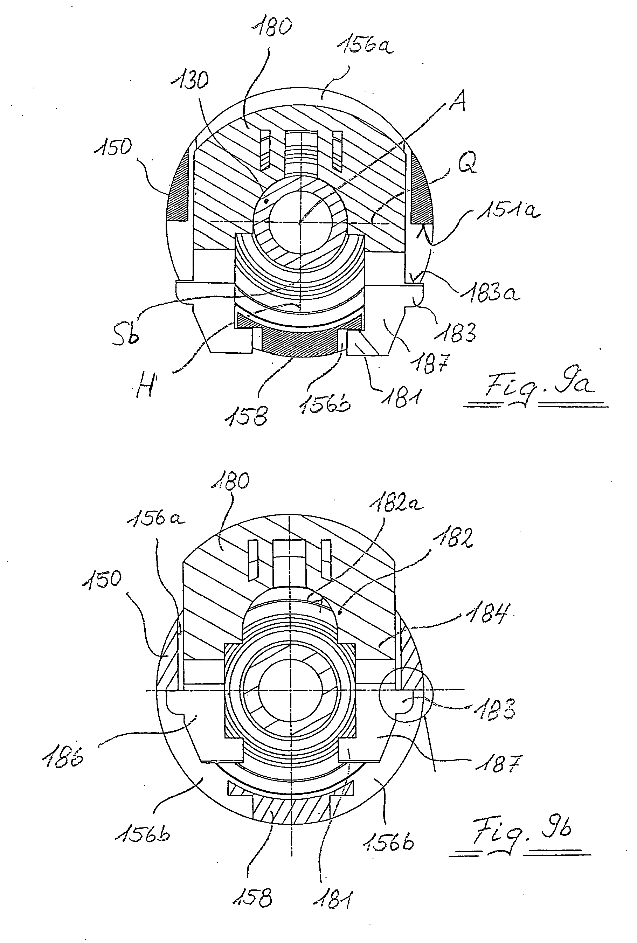

Wie man am besten in den Figuren 5, 9a und 9b erkennt, weist die äußere Hülse 150 im Bereich ihres im montierten Zustand vom Rohr 120 abgewandten Längsendes in ihrer äußeren Umfangsfläche ein erstes Fenster 156a und zwei weitere Fenster 156b auf. Dabei sind die beiden weiteren Fenster 156b zu einer durch die Längsachse A der äußeren Hülse 150 verlaufenden Spiegelebene Sa im Wesentlichen spiegelsymmetrisch ausgebildet und angeordnet.

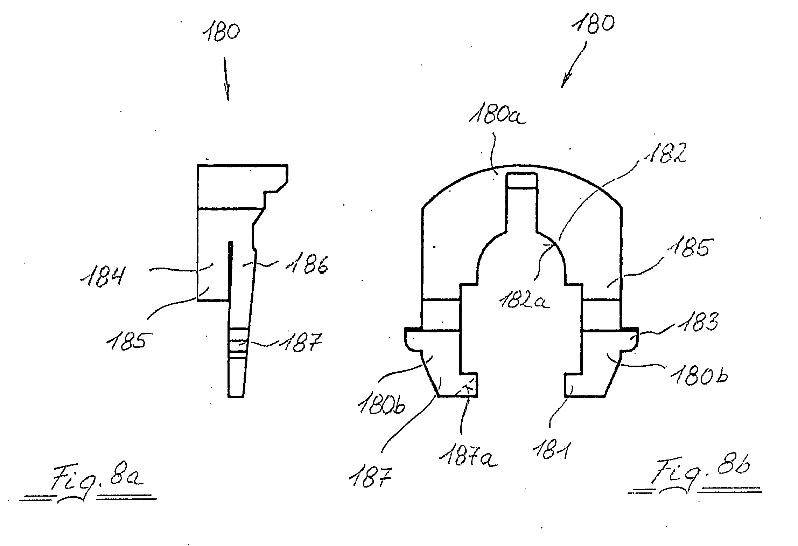

Das von der inneren Hülse 140 gesondert ausgebildete Halteelement 180 weist eine im Wesentlichen U-förmige Gestalt (siehe Figur 8b) auf mit einem Basisschenkel 180a, der dem ersten Fenster 156a zugeordnet ist, und zwei Seitenschenkeln 180b, von denen jeder jeweils einem der beiden weiteren Fenster 156b zugeordnet ist (siehe Figur 9a).

In der Seitenansicht der Figur 8a erkennt man, dass das Halteelement 180 in axialer Richtung einen ersten, im Wesentlichen starren Abschnitt 184 sowie einen zweiten, als Federelement ausgebildeten Abschnitt 186 aufweist, der im montierten Zustand der Verbindungsanordnung 110 dem Rohr 120 zugewandt angeordnet ist. Beide Abschnitte 184, 186 haben einen gemeinsamen, dem Basisschenkel 180a entsprechenden Basissteg 181. Der im Wesentlichen starre Abschnitt 184 hat darüber hinaus nur zwei kurze, sich nur geringfügig über die Querachse Q (siehe Figur 9a) hinaus erstreckende Seitenstege 185, während der als Federelement ausgebildete Abschnitt 186 über zwei lange Seitenstege 187 verfügt.

Zur Montage der Verbindungsanordnung 110 kann das Halteelement 180 mit den Seitenstegen 187 voran durch das erste Fenster 156a in die äußere Hülse 150 eingesetzt werden, wobei die freien Enden der Seitenstege 187 jeweils in eines der beiden weiteren Fenster 156b eingeführt werden (siehe Figuren 9b und 9a).

An den Außenseiten der Seitenstege 187 ist jeweils ein äußerer Ansatz 183 vorgesehen. Die äußeren Ansätze 183 umfassen jeweils eine Anlagefläche 183a, die zum Zusammenwirken mit einer Gegenanlagefläche 151 a bestimmt ist, welche an einem Begrenzungsrand 151 jeweils eines der beiden weiteren Fenster 156b vorgesehen ist. Um das Halteelement 180 in das erste Fenster 156a einführen zu können, muss der Abschnitt 186 unter Ausnutzung seiner Federelastizität seitlich zusammengedrückt werden. Sind die äußeren Ansätze 183 in den Bereich der beiden weiteren Fenster 156b gelangt, so entspannt sich der Abschnitt 186 wieder und die äußeren Ansätze 183 hintergreifen den jeweiligen Begrenzungsrand 151 der Fenster 156b. Die äußeren Ansätze 183 bzw. das Zusammenwirken der Flächen 183a und 151 a stellt eine Verliersicherung für das Halteelement 180 dar.

Gleichzeitig zeigt die Anlage der Flächen 183a und 151 a aber auch an, dass sich das Halteelement 180 in einer Verbindungsstückeinführermöglichungsstellung befindet, in der es das Einführen des Verbindungsstücks 130 in das Rohr 120 zulässt. Genauer gesagt, ist der zwischen den Seitenstegen 187 vorhandene Raum in dieser Stellung weit genug, um die Ringschulter 136 des Verbindungsstücks 130 an dem starren Abschnitt 184 vorbeibewegen zu können (siehe Figuren 9b).

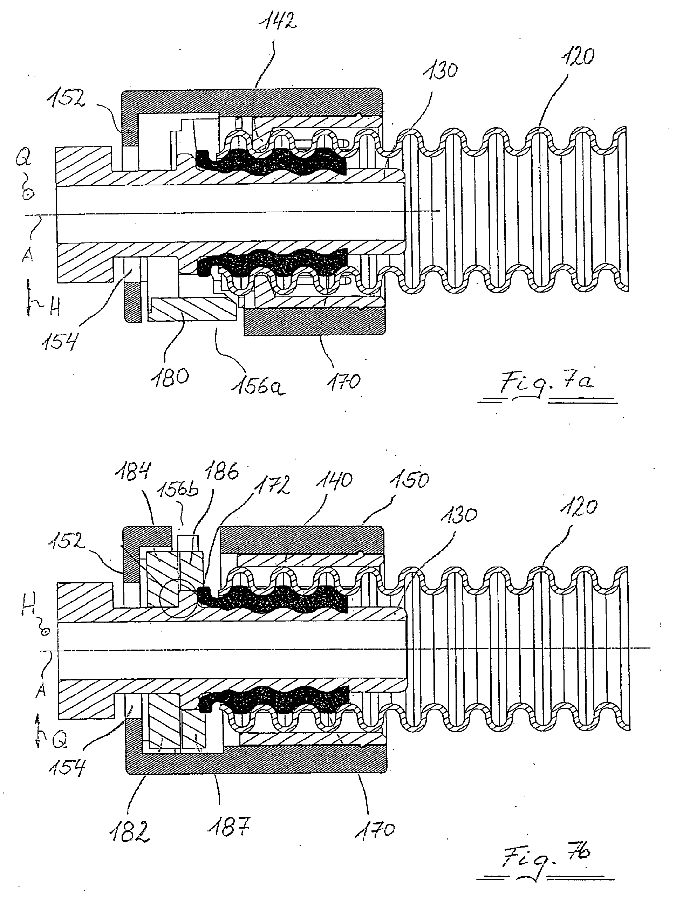

Anschließend kann das Halteelement 180 aus der Verbindungsstückeinführermöglichungsstellung gemäß Figur 9b in die Verbindungsstückhaltestellung gemäß Figur 9a übergeführt werden, indem man es weiter in das erste Fenster 156a hineindrückt. Hierdurch gelangt ein Haltevorsprung 182 mit einer im Wesentlichen halbkreisförmigen Haltefläche 182a, der vorzugsweise an dem im Wesentlichen starren Abschnitt 184 des Halteelements 180 ausgebildet ist, in Anlage an die Außenumfangsfläche 134 des hohlzylindrischen Abschnitts 132 des Verbindungsstücks 130. Gleichzeitig hintergreift der starre Abschnitt 184 die Ringschulter 136 des Verbindungsstücks 130 (siehe Figuren 7b und 9a). Im Zuge des weiteren Eindrückens des Halteelements 180 in das erste Fenster 156a treten die freien Enden der Seitenstege 187 des als Federelement ausgebildeten Abschnitts 186 aus den beiden weiteren Fenstern 156b heraus und hintergreifen mit inneren Ansätzen 181 den die beiden weiteren Fenster 156b voneinander trennenden Steg 158 der äußeren Hülse 150 (siehe Figur 9a). Der formschlüssige Eingriff der inneren Ansätze 181 mit dem Steg 158 sichert die Verbindung von Rohr 120 und Verbindungsstück 130.

Nachzutragen ist noch, dass an den freien Enden der Seitenstege 187 Einweisungsschrägen 187a vorgesehen sein können (siehe Figur 8b), um die Vorüberbewegung der freien Enden der Seitenstege187 an dem Steg 158 erleichtern zu können.

Zum Lösen der Verbindung von Rohr 120 und Verbindungsstück 130 spreizt man die freien Enden der Seitenstege 187 seitlich auf, bis die inneren Ansätze 181 an dem zentralen Steg 158 der äußeren Hülse vorbei bewegt werden können, und drückt dann die Seitenstege 187 des Halteelements 180 in Richtung des ersten Fensters 156a, bis die Flächen 151 a und 183a aneinander anliegen.

Wie sich aus der vorstehenden Beschreibung und insbesondere auch den Figuren 5 bis 9b ergibt, sind sämtliche Komponenten der Verbindungsanordnung 110 bezüglich der von der Achsrichtung A und der Hochrichtung H aufgespannten Ebene Sa (siehe Figur 9a) spiegelsymmetrisch ausgebildet.

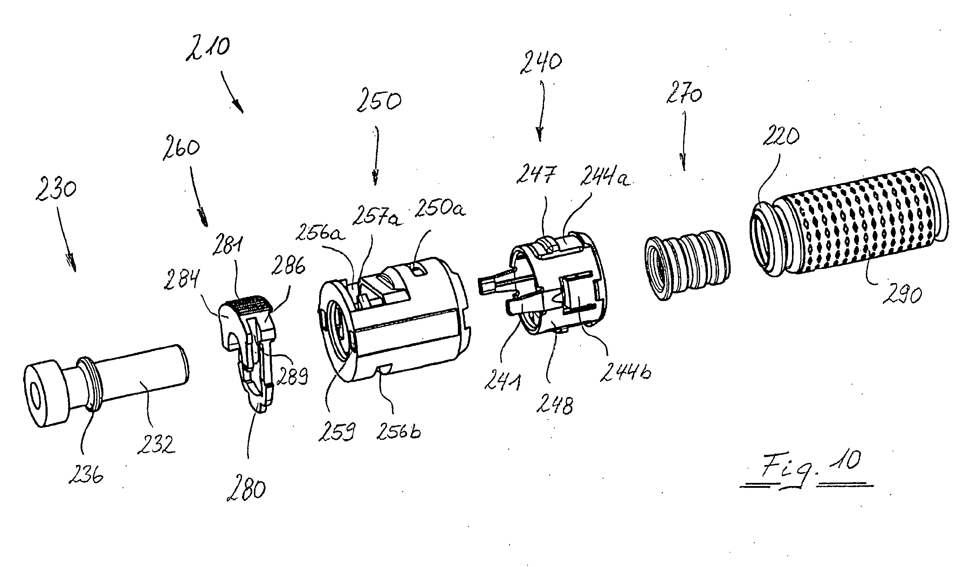

Die Figuren 10 bis 15 zeigen eine dritte Ausführungsform der erfindungsgemäßen Verbindungsanordnung 210, die im Wesentlichen der Ausführungsform gemäß Figuren 5 bis 9b entspricht. Analoge Teile sind daher mit gleichen Bezugszeichen versehen wie in den Figuren 5 bis 9b, jedoch vermehrt um die Zahl 100, d.h im Vergleich zu den Figuren 1 bis 4 vermehrt um die Zahl 200. Darüber hinaus wird die Verbindungsanordnung 210 gemäß den Figuren 10 bis 15 im folgenden nur insoweit beschrieben werden, als sie sich von der Verbindungsanordnung 110 gemäß den Figuren 5 bis 9b unterscheidet, auf deren Beschreibung ansonsten einschließlich des Verweises auf die Beschreibung der Ausführungsform gemäß Figuren 1 bis 4 ausdrücklich verwiesen sei.

Die Verbindungsanordnung 210 gemäß Figuren 10 bis 15 unterscheidet sich von der Verbindungsanordnung 110 gemäß Figuren 5 bis 9b im Wesentlichen in drei Aspekten, nämlich zum einen das Zusammenwirken von Rastmittel 260 und äußerer Hülse 250, zum anderen das Zusammenwirken von äußerer Hülse 250 und innerer Hülse 240 und schließlich auch noch die Möglichkeit des Vorsehens eines Schutzschlauches 290 für das Rohr 220. Diese drei Aspekte sind konstruktiv und funktional voneinander unabhängig, d.h. sie können, sie müssen aber nicht, gleichzeitig an der Verbindungsanordnung 210 ausgebildet sein.

Was die Ausbildung des Rohrs 220, der optional vorgesehenen Dichtungshülse 270 und des Verbindungsstücks 230 anbelangt, sei auf die Beschreibung der Verbindungsanordnung 10 gemäß Figuren 1 bis 4 verwiesen.

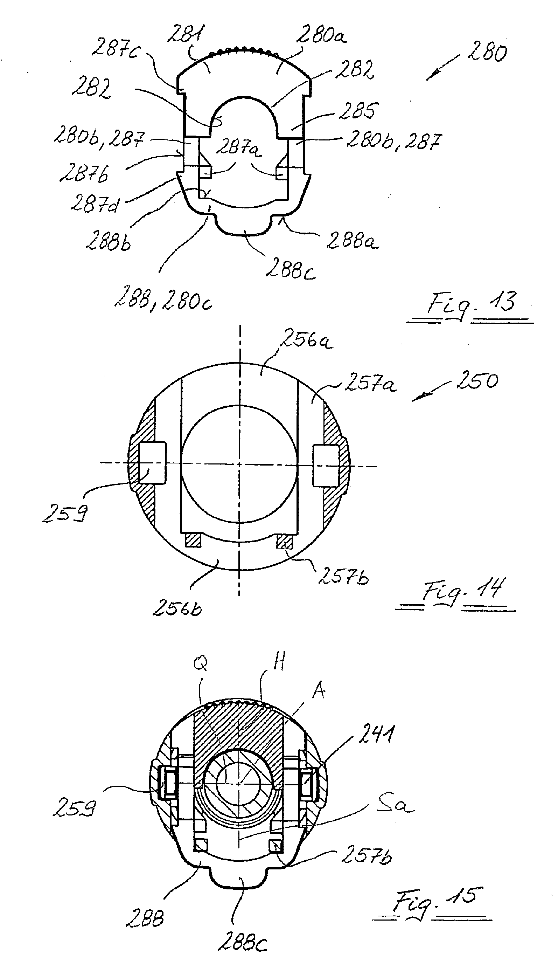

Hinsichtlich des erstgenannten Unterscheidungsaspekts weist das Halteelement 280 eine im Wesentlichen rechteckige Grundform auf (siehe Figur 13). Das Halteelement 280 umfasst hierzu einen Basisschenkel 280a, zwei Seitenschenkel 280b und einen Abschlussschenkel 280c, der die vom Basisschenkel 280a entfernten Endabschnitte der Seitenschenkel 280b miteinander zu der rechteckigen Grundgestalt verbindet. Durch die geschlossene Recktecksform kann die Robustheit des Halteelements 280 und das Zusammenspiel von Halteelement 280 und äußerer Hülse 250 im Hinblick auf das Herstellen und Wiederlösen der Verbindung mit dem Verbindungsstück 230 verbessert werden, wie nachstehend noch eingehend erläutert werden wird.

Wie in der zweiten Ausführungsform weist das Halteelement 280 in axialer Richtung einen ersten, im Wesentlichen starren Abschnitt 284 sowie einen zweiten Abschnitt 286 auf (siehe Figur 10), der im montierten Zustand der Verbindungsanordnung 210 dem Rohr 220 zugewandt angeordnet ist. Beide Abschnitte 284, 286 haben einen gemeinsamen Basissteg 281.

Wie bei der Ausführungsform gemäß Figuren 5 bis 9b weist der im Wesentlichen starre Abschnitt 284 gemäß Figur 13 zwei kurze Seitenstege 285 mit einem Haltevorsprung 282 auf, der über eine im Wesentlichen halbkreisförmigen Haltefläche 282a verfügt und zum Zusammenwirken mit der Ringschulter 236 des Verbindungsstücks 230 bestimmt ist. Der zweite Abschnitt 286 bildet die vorstehend angesprochene Rechtecksform. Hierzu gehen von den Basissteg 281 zwei Seitenstege 287 aus, die den Seitenschenkeln 280b der Rechtecksform entsprechen und die an ihren vom Basissteg 281 abgewandten Enden mittels eines Verbindungsstegs 288 verbunden sind. Wie nachfolgend noch näher erläutert werden wird, verfügen die Seitenstege 287 über eine gewisse Federelastizität. Das Halteelement 280 kann hierzu aus Kunststoff oder Metall gefertigt sein.

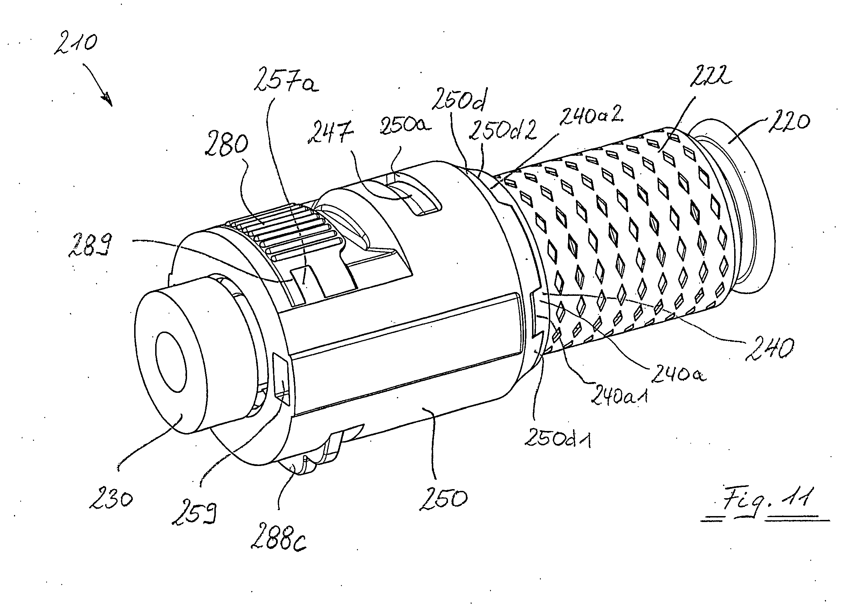

Zwischen dem starren Abschnitt 284 und dem zweiten Abschnitt 286 weist das Halteelement 280 seitlich zwei Führungsnuten 289 auf (siehe Figuren 10 und 11), die beim Einsetzen des Halteelements 280 in ein erstes Fenster 256a der äußeren Hülse 250 mit Führungsvorsprüngen 257a zusammenwirken. Im Unterschied zur Ausführungsform gemäß Figuren 5 bis 9b verfügt die Ausführungsform gemäß Figuren 10 bis 15 über ein einziges zweites Fenster 256b, welches dem Verbindungssteg 288 zugeordnet ist. Diesem zweiten Fenster 256b benachbart sind an der äußeren Hülse 250 zwei Vorsprünge 257b ausgebildet, welche beim Einführen des Halteelements 280 in die äußere Hülse 250 mit dem Verbindungssteg 288 des Halteelements 280, genauer gesagt dessen Außenfläche 288a, zusammenwirken und dessen Einführbewegung begrenzen. Bei Anlage des Verbindungsstegs 288 an den Vorsprüngen 257b befindet sich das Halteelement 280 in einer Verbindungsstückeinführermöglichungsstellung, in der es das Einführen des Verbindungsstücks 230 in das Rohr 220 zulässt.

Das Zusammenwirken der Führungsnuten 289 mit den Führungsvorsprüngen 257a stellt sicher, dass das Halteelement 280 nicht versehentlich um eine zur Querachse Q parallele Achse verkippt und somit die die Verbindungsstückeinführermöglichungsstellung sichernde Anlage des Verbindungsstegs 288 an den Vorsprüngen 257b aufgehoben wird.

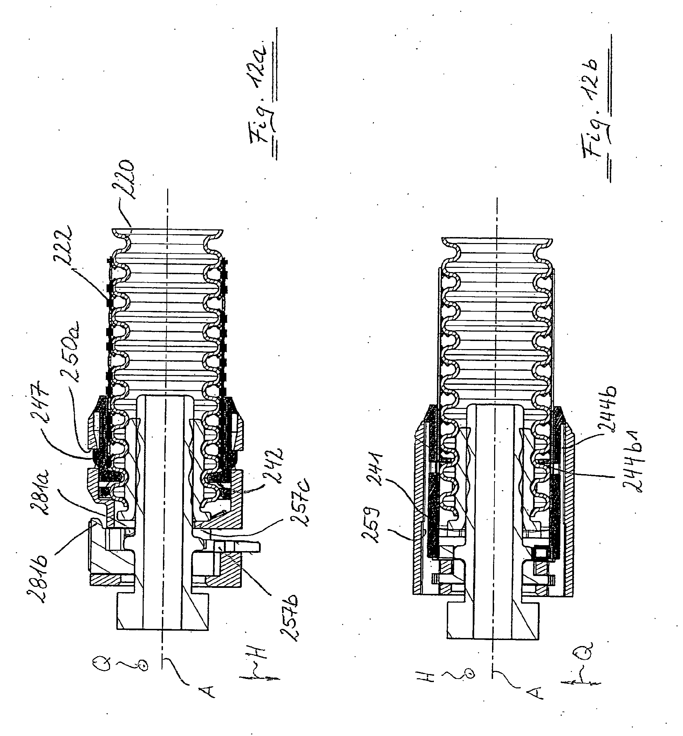

An der Innenseite der Seitenstege 287 sind zwei seitliche Vorsprünge 287a vorgesehen, welche in der Verbindungsstückeinführermöglichungsstellung des Halteelements 280 in den Einführungsweg der Ringschulter 236 des Verbindungsstücks 230 hineinragen, während sie den hohlzylindrischen Abschnitt 232 des Verbindungsstücks 230 ungehindert passieren lassen. Drückt man das Halteelement 280 gegen die Federelastizität der Seitenstege 287 weiter in die äußere Hülse hinein, bis es in Anlage gegen eine Abschlagrippe 257c (Figur 12a) der äußeren Hülse 250 gelangt, so wird hierdurch die Anlage des Verbindungsstegs 288 an den Vorsprüngen 257b aufgehoben, und das Halteelement 280 kann weiter in das Fenster 256a eingeführt werden, nämlich bis in seine Verbindungsstückhaltestellung, in der es die Ringrippe 236 mit seinem Haltevorsprung 282 hintergreift. Bei dieser weiteren Bewegung treten die seitlichen Vorsprünge 287a außer Eingriff mit der Ringrippe 236 und die Seitenstege 287 des Halteelements 280 richten sich unter dem Einfluss ihrer Eigenelastizität wieder gerade. In dieser Stellung liegt der Verbindungssteg 288 mit seiner Innenfläche 288b an den Vorsprüngen 257b an und sichert das Halteelement 280 in der Verbindungsstückhaltestellung (siehe Figur 15). Zudem treten zwei innere Keilstücke 281 a in Eingriff mit der Ringschulter 236 und drücken das Verbindungsstück 230 außer Eingriff mit der Anschlagrippe 257c (siehe Figur 12a).

Wie man in Figur 15 weiter erkennt, verfügt der Verbindungssteg 288 des Halteelements 280 über einen Ansatz 288c, der in der Verbindungsstückhaltestellung aus dem zweiten Fenster 256b herausragt (siehe auch Figur 11). An diesem Ansatz 288c kann ein Benutzer der Verbindungsanordnung 210, der das Verbindungsstück 230 wieder vom Rohr 220 lösen möchte, zur Einleitung des Lösevorgangs angreifen und ihn entgegen der Federelastizität der Seitenstege 287 in axialer Richtung auf das Rohr 220 zu drücken. Hat sich der Verbindungssteg 288 infolge dieser Bewegung an den Vorsprüngen 257b vorbeibewegt, so kann der Benutzer den Ansatz 288c anschließend in das zweite Fenster 256b hineindrücken, wodurch die seitlichen Vorsprünge 287a wieder zwischen der Ringschulter 236 und der Anschlagrippe 257c angeordnet werden, und der Haltevorsprung 282 die Ringrippe 236 freigibt. Ausgehend von dieser Lösevorbereitungsstellung des Halteelements 280 kann das Verbindungsstück 230 in einfacher Weise wieder aus der äußeren Hülse 250 herausgezogen und somit vom Rohr 220 gelöst werden.

Um in einer Situation, in der das Halteelement 280 zwar in die äußere Hülse 250 eingesetzt ist, aber kein Verbindungsstück 230 in das Rohr eingeführt worden ist, also in einer der Verbindungsstückeinführermöglichungsstellung entsprechenden Vormontagestellung der Verbindungsanordnung 210 einen Verlierschutz für das Halteelement 280 bereitstellen zu können, kann die innere Hülse 240 zwei von ihrem Basiskörper axial abstehende Stege 241 aufweisen, die in zugeordnete Durchgänge 259 (Figur 12b) der äußeren Hülse 250 eingeführt werden und sich durch diese hindurch bis zum Halteelement 280 erstrecken können. Die freien Enden dieser Stege 241 wirken mit den Außenflächen 287b der Seitenstege 287 zusammen, insbesondere mit einem oberen Anschlag 287c und einem unteren Anschlag 287d dieser Seitenflächen 287b. Das Zusammenwirken der unteren Anschläge 287d mit den Stegen 241 stellt den genannten Verlierschutz bereit, während das Zusammenwirken der oberen Anschläge 287c mit den Stegen 241 verhindert, dass das Halteelement 280 zu weit in die äußere Hülse 250 hinein gedrückt werden kann. Letzteres wird zudem durch die Anlage eines Ansatzes 281 b des Basisstegs 281 (Figur 12a) an der Begrenzungsfläche des ersten Fensters 256a der äußeren Hülse 250 verhindert. Die beiden letztgenannten auch unabhängig voneinander einsetzbaren Maßnahmen stellen zudem einen Beschädigungsschutz für die Vorsprünge 257b bereit.

Was den zweiten Unterschiedsaspekt anbelangt, ist die Verbindung von äußerer Hülse 250 und innerer Hülse 240 bei der Ausführungsform gemäß Figuren 10 bis 15 deutlich robuster ausgebildet als bei den Ausführungsformen gemäß Figuren 1 bis 4 und 5 bis 9b. Und zwar ist auf der Außenseite der beiden Laschen 244a, die der Verbindung der inneren Hülse 240 mit dem Rohr 220 dienen, jeweils ein Rastvorsprung 247 ausgebildet, der mit einer zugeordneten Rastöffnung 250a der äußeren Hülse zusammenwirkt. Zudem ermöglicht es diese Art der Verrastung von innerer Hülse 240 und äußerer Hülse 250 in einfacher Weise, die innere Hülse 240 wieder von der äußeren Hülse 250 zu lösen.

Es sei an dieser Stelle nochmals betont, dass der zweite Unterschiedaspekt auch unabhängig von dem ersten Unterschiedsaspekt bei den Ausführungsformen der Figuren 1 bis 4 und 5 bis 9b eingesetzt werden kann.

Mit Bezug auf den dritten Unterschiedsaspekt kann das Rohr 220 optional mit einem Schutzschlauch 290 versehen sein. Dieser Schutzschlauch 290 kann beispielweise als Abrasionsschutz, als Schutz gegen radiale Ausdehnung durch Berstdruck sowie als Schutz gegen Ausdehnung in Längsrichtung der Rohrverbindungsanordnung parallel zur Zylinderachse der Rohrverbindungsvorrichtung, zur thermischen Isolierung sowie zur Verstärkung des Rohrs dienen, und kann beispielsweise von einem Gewebe- und/oder Geflechtschlauch gebildet sein.

Um den Schutzschlauch 290 in einfacher Weise sicher am Rohr 220 halten zu können, kann der Basiskörper 248 der inneren Hülse über ein zweites Paar von Laschen 244b verfügen, die bezüglich des ersten Paars von Laschen 244a an um 90° verschobenen Umfangspositionen der inneren Hülse 240 vorgesehen sind und an ihrer Innenseite jeweils eine Mehrzahl von zahnartigen Vorsprüngen 244b1 aufweisen, welche beispielsweise die Maschen eines als Geflechtschlauch ausgebildeten Schutzschlauches 290 durchgreifen. Die Vorsprünge 244b1 greifen bevorzugt in ein anderes

Wellental des Wellrohrs 220 ein als die Vorsprünge 242 der Laschen 244a (siehe Figur 12a).

Auch das Vorsehen des Schutzschlauchs 290 und der ihn haltenden Laschen 244b kann unabhängig von den anderen Unterschiedsaspekten sowohl bei der Ausführungsform gemäß Figuren 1 bis 4 als auch jener der Figuren 5 bis 9b mit Vorteil eingesetzt werden.

Ein weiterer vorstehend noch nicht angesprochener Unterschied zwischen den Ausführungsformen gemäß Figuren 1 bis 4 und 5 bis 9b und der Ausführungsform gemäß Figuren 10 bis 15 besteht in der Ausgestaltung der rohrzugewandten Enden von äußerer Hülse 250 und innerer Hülse 240. Und zwar verfügen beide Hülsen an ihrem rohrzugewandten Ende über eine sich zum Rohr 220 hin verjüngende Schrägfläche 250d bzw. 240a, welche mit Vorsprüngen 250d1 bzw. 240a1 und Ausnehmungen 250d2 bzw. 240a2 ausgebildet sind, welche nach Art einer Verzahnung ineinandergreifen. Auf diese Weise ergibt sich ein haptisch angenehmer Übergang von der äußeren Hülse 250 zum Rohr 220 und zudem ein Verdrehschutz der beiden Hülsen 250 und 240, was wiederum deren Funktionsteile, beispielsweise die Laschen 244a, 244b einschließlich ihrer Rastvorsprünge, die Stege 241 und dergleichen, vor Beschädigung schützt.

Wie sich aus der vorstehenden Beschreibung und insbesondere auch den Figuren 10 bis 15 ergibt, sind sämtliche Komponenten der Verbindungsanordnung 210 bezüglich der von der Achsrichtung A und der Hochrichtung H aufgespannten Ebene Sa (siehe Figur 15) spiegelsymmetrisch ausgebildet.

## Patentansprüche

1. Verbindungsanordnung (10; 110; 210), vorzugsweise für Fluidleitungen in Fahrzeugen, umfassend
- wenigstens ein Rohr (20; 120; 220), in dessen äußerer Umfangsfläche wenigstens eine Umfangsnut (24) ausgebildet ist, wobei das Rohr (20; 120; 220) vorzugsweise ein Wellrohr ist,
- ein von dem Rohr (20; 120; 220) gesondert ausgebildetes Verbindungsstück (30; 130; 230), das einen im Wesentlichen hohlzylindrischen Abschnitt (32; 132; 232) umfasst, der in das Rohr (20; 120; 220) einführbar ist, wobei sich eine an der Außenumfangsfläche (34; 134) des Verbindungsstücks (30; 130; 230) ausgebildete Ringschulter (36; 136; 236) stets außerhalb des Rohrs (20; 120; 220) befindet,
- eine innere Hülse (40; 140; 240), die das Rohr (20; 120; 220) umgibt und mit einem radial nach innen abstehenden Vorsprung (42) einstückig ausgebildet ist, der in die wenigstens eine Umfangsnut (24) des Rohrs (20; 120; 220) eingreift, und
- eine von dem Rohr (20; 120; 220), dem Verbindungsstück (30; 130; 230) und der inneren Hülse (40; 140; 240) gesondert ausgebildete äußere Hülse (50; 150; 250), die die innere Hülse (40; 140; 240) umgibt, an dieser in axialer Richtung gesichert ist und den Vorsprung (42) gegen unbeabsichtigtes Herausheben aus der wenigstens einen Umfangsnut (24) sichert,
**dadurch gekennzeichnet, dass** die innere Hülse (40; 140; 240) als von dem Verbindungsstück (30; 130; 240) und dem Rohr (20; 120; 220) gesondertes Element ausgebildet ist und dass mit der inneren Hülse (40; 140; 240) oder/und der äußeren Hülse (50; 150; 250) zusammenwirkende Rastmittel (60; 160; 260) vorgesehen sind, die die Ringschulter (36; 136; 236) des Verbindungsstücks (30; 130; 230) auf der von dem Rohr (20; 120; 220) abgewandten Seite hintergreifen.

2. Verbindungsanordnung nach Anspruch 1,
**dadurch gekennzeichnet, dass** sich die innere Hülse (40; 140; 240) oder/und die äußere Hülse (50; 150; 250) zumindest abschnittsweise durchgehend über den gesamten Umfang erstreckt bzw. erstrecken.

3. Verbindungsanordnung nach Anspruch 1 oder 2,
**dadurch gekennzeichnet, dass** der Vorsprung (42) am freien Ende einer Lasche (44; 144; 244a) angeordnet ist, die vorzugsweise in einem Fenster (46; 146) der inneren Hülse (40; 140; 240) aufgenommen ist.

4. Verbindungsanordnung nach einem der vorhergehenden Ansprüche,
**dadurch gekennzeichnet, dass** zwischen dem im Wesentlichen hohlzylindrischen Abschnitt (32; 132; 232) des Verbindungsstücks (30; 130; 230) und dem Rohr (20; 120; 220) eine Dichtungshülse (70; 170; 270) vorgesehen ist, die vorzugsweise an ihrem aus dem Rohr (20; 120; 220) herausstehenden axialen Ende einen Ringflansch (76) aufweist.

5. Verbindungsanordnung nach einem der vorhergehenden Ansprüche,
**dadurch gekennzeichnet, dass** die äußere Hülse (50; 150; 250) an einem Längsende einen radial nach innen abstehenden Flansch (52) aufweist, der eine Öffnung (54) umgrenzt, die ein Einführen der Ringschulter (36; 136; 236) des Verbindungsstücks (30; 130; 230) erlaubt, ein Einführen eines Kopfteils (38) des Verbindungsstücks (30; 130; 230) jedoch verhindert.

6. Verbindungsanordnung nach einem der vorhergehenden Ansprüche,
**dadurch gekennzeichnet, dass** die Rastmittel (60) wenigstens eine an der inneren Hülse (40) einstückig angeformte Rastnase (49) umfassen.

7. Verbindungsanordnung nach Anspruch 6,
**dadurch gekennzeichnet, dass** die wenigstens eine Rastnase (49) mit einem Basiskörper (48) der inneren Hülse (40) über einen elastisch verformbaren Steg (41, 45) verbunden ist.

8. Verbindungsanordnung nach Anspruch 6 oder 7,
**dadurch gekennzeichnet, dass** wenigstens ein Drückerelement (43) mit der wenigstens einen Rastnase (49) über wenigstens einen Umfangssteg (45) verbunden ist, der derart ausgebildet und angeordnet ist, dass ein radiales Einwärtsdrücken des wenigstens einen Drückerelements (43) zu einer radialen Auswärtsbewegung der wenigstens einen Rastnase (49) führt.

9. Verbindungsanordnung nach Anspruch 8,
**dadurch gekennzeichnet, dass** das wenigstens eine Drückerelement (43) durch ein zugeordnetes Fenster (56) der äußeren Hülse (50) aus dieser herausragt.

10. Verbindungsanordnung nach einem der Ansprüche 1 bis 5,
**dadurch gekennzeichnet, dass** die Rastmittel (160; 260) wenigstens einen an einem gesonderten Halteelement (180; 280) ausgebildeten Haltevorsprung (182; 282) umfassen.

11. Verbindungsanordnung nach Anspruch 10,
**dadurch gekennzeichnet, dass** das Halteelement (180; 280) in axialer Richtung einen ersten, im Wesentlichen starren Abschnitt (184; 284) aufweist, der mit dem Verbindungsstück (130; 230) formschlüssig in Eingriff tritt und den wenigstens einen Haltevorsprung (182; 282) trägt, sowie einen zweiten, als Federelement ausgebildeten Abschnitt (186; 286), der der Sicherung des Halteelements (180; 280) an der äußeren Hülse (150; 250) dient.

12. Verbindungsanordnung nach Anspruch 10 oder 11,
**dadurch gekennzeichnet, dass** die äußere Hülse (150; 250) ein erstes Fenster (156a; 256a) umfasst, durch welches das Halteelement (180; 280) mit seinen Seitenstegen (187; 287), vorzugsweise des als Federelement ausgebildeten Abschnitts (186; 286) des Halteelements (180; 280), voran eingesetzt ist, sowie wenigstens ein zweites Fenster (156b; 256b), aus welchem bzw. welchen die Enden der Seitenstege (187; 287) des Halteelements (180; 280) wieder heraustreten.

13. Verbindungsanordnung nach Anspruch 12,
**dadurch gekennzeichnet, dass** an den beiden Seitenstegen (187) nach innen abstehende Mittel (181; 288) vorgesehen sind, mittels derer das Halteelement (180; 280) wenigstens einen Vorsprung (158; 257b) der äußeren Hülse (150; 250) hintergreift.

14. Verbindungsanordnung nach Anspruch 12 oder 13,
**dadurch gekennzeichnet, dass** an den beiden Seitenstegen (187; 287) jeweils ein äußerer Ansatz (183; 287d) vorgesehen ist, der ein unbeabsichtigtes Lösen des Halteelements (180; 280) aus der äußeren Hülse (150; 250) verhindert.

15. Verbindungsanordnung nach einem der vorhergehenden Ansprüche,
**dadurch gekennzeichnet, dass** an der äußeren Hülse (250) und am Halteelement (280) zusammenwirkende Führungsmittel (257a, 289), vorgesehen sind, welche sich vorzugsweise in einer sowohl zur Querrichtung (Q) als auch zur Axialrichtung (A) der äußeren Hülse (250) im Wesentlichen orthogonal verlaufenden Richtung (H) erstrecken.

## Claims

1. Connection assembly (10; 110; 210), preferably for fluid lines in vehicles, comprising:
- at least one tube (20; 120; 220), in the outer peripheral face of which at least one circumferential groove (24) is formed, the tube (20; 120; 220) preferably being a corrugated tube,
- a connection piece (30; 130; 230) which is formed separately from the tube (20; 120; 220) and comprises a portion (32; 132; 232), substantially in the form of a hollow cylinder, which can be inserted into the tube (20; 120; 220), an annular collar (36; 136; 236) formed on the outer circumferential face (34; 134) of the connection piece (30; 130; 230) always being located outside the tube (20; 120; 220),
- an inner sleeve (40; 140; 240) which surrounds the tube (20; 120; 220) and is formed in one piece with a projection (42) which projects radially inwards and engages in the at least one circumferential groove (24) of the tube (20; 120; 220), and
- an outer sleeve (50; 150; 250) which is formed separately from the tube (20; 120; 220), the connection piece (30; 130; 230) and the inner sleeve (40; 140; 240), surrounds the inner sleeve (40; 140; 240), is secured thereto in the axial direction and secures the projection (42) against unintended removal from the at least one circumferential groove (24),
**characterised in that** the inner sleeve (40; 140; 240) is formed as a separate element from the connection piece (30; 130; 240) and the tube (20; 120; 220), and **in that** latching means (60; 160; 260) are provided which cooperate with the inner sleeve (40; 140; 240) and/or the outer sleeve (50; 150; 250) and engage behind the annular collar (36; 136; 236) of the connection piece (30; 130; 230) at the end facing away from the tube (20; 120; 220).

2. Connection assembly according to claim 1, **characterised in that** the inner sleeve (40; 140; 240) and/or the outer sleeve (50; 150; 250) extend(s) continuously over the entire circumference at least in portions.

3. Connection assembly according either claim 1 or claim 2, **characterised in that** the projection (42) is arranged at the free end of a tab (44; 144; 244a) which is preferably received in a window (46; 146) of the inner sleeve (40; 140; 240).

4. Connection assembly according to any of the preceding claims, **characterised in that** a sealing sleeve (70; 170; 270) is provided between the portion (32; 132; 232), substantially in the form of a hollow cylinder, of the connection piece (30; 130; 230) and the tube (20; 120; 220) and preferably has an annular flange (76) at its axial end projecting out of the tube (20; 120; 220).

5. Connection assembly according to any of the preceding claims, **characterised in that**, at a longitudinal end, the outer sleeve (50; 150; 250) has a flange (52) which projects radially inwards and defines an opening (54) which allows insertion of the annular collar (36; 136; 236) of the connection piece (30; 130; 230) yet prevents insertion of a head part (38) of the connection piece (30; 130; 230).

6. Connection assembly according to any of the preceding claims, **characterised in that** the latching means (60) comprise at least one latching nose (49) which is integrally formed in one piece on the inner sleeve (40).

7. Connection assembly according to claim 6, **characterised in that** the at least one latching nose (49) is connected to a basic body (48) of the inner sleeve (40) via a resiliently deformable web (41, 45).

8. Connection assembly according to either claim 6 or claim 7, **characterised in that** at least one pusher element (43) is connected to the at least one latching nose (49) via at least one circumferential web (45) which is formed and arranged in such a way that, when the at least one pusher element (43) is pushed radially inwards, this causes the at least one latching nose (49) to move radially outwards.

9. Connection assembly according to claim 8, **characterised in that** the at least one pusher element (43) projects out of the outer sleeve (50) through an associated window (56) thereof.

10. Connection assembly according to any of claims 1 to 5, **characterised in that** the latching means (160; 260) comprise at least one retention projection (182; 282) which is formed on a separate retention element (180; 280).

11. Connection assembly according to claim 10, **characterised in that**, in the axial direction, the retention element (180; 280) has a first substantially rigid portion (184; 284), which engages with the connection piece (130; 230) in an interlocking manner and supports the at least one retention projection (182; 282), and a second portion (186; 286), which is formed as a spring element and used to secure the retention element (180; 280) on the outer sleeve (150; 250).

12. Connection assembly according to either claim 10 or claim 11, **characterised in that** the outer sleeve (150; 250) comprises a first window (156a; 256a), through which the retention element (180; 280) is inserted with its lateral webs (187; 287), preferably of the portion (186; 286) of the retention element (180; 280) which is formed as a spring element, leading, and at least one second window (156b; 256b), out of which the ends of the lateral webs (187; 287) of the retention element (180; 280) protrude again.

13. Connection assembly according to claim 12, **characterised in that** inwardly projecting means (181; 288) are provided on the two lateral webs (187), by means of which means the retention element (180; 280) engages behind at least one projection (158; 257b) of the outer sleeve (150; 250).

14. Connection assembly according to either claim 12 or claim 13, **characterised in that** an outer lug (183; 287d) is provided on each of the two lateral webs (187; 287) and prevents an unintended release of the retention element (180; 280) from the outer sleeve (150; 250).

15. Connection assembly according to any of the preceding claims, **characterised in that** cooperating guide means (257a; 289) are provided on the outer sleeve (250) and on the retention element (280) and preferably extend in a direction (H) which is substantially orthogonal to both the transverse direction (Q) and the axial direction (A) of the outer sleeve (250).

## Revendications

1. Dispositif de raccordement (10; 110; 210), de préférence pour des conduites de fluide dans des véhicules, comprenant:
- au moins un tube (20; 120; 220), dont la surface latérale extérieure présente au moins une gorge périphérique (24), dans lequel le tube (20; 120; 220) est de préférence un tube ondulé,
- une pièce de raccordement (30; 130; 230) formée séparément du tube (20; 120; 220), qui comprend une partie essentiellement cylindrique creuse (32; 132; 232), qui peut être introduite dans le tube (20; 120; 220), dans lequel un épaulement annulaire (36; 136; 236) formé sur la surface latérale extérieure (34; 134) de la pièce de raccordement (30; 130; 230) se trouve toujours à l'extérieur du tube (20; 120; 220),
- une douille intérieure (40; 140; 240), qui entoure le tube (20; 120; 220) et qui est formée d'une seule pièce avec une saillie (42) saillante radialement vers l'intérieur, qui s'engage dans ladite au moins une gorge périphérique (24) du tube (20; 120; 220), et
- une douille extérieure (50; 150; 250) formée séparément du tube (20; 120; 220), de la pièce de raccordement (30; 130; 230) et de la douille intérieure (40; 140; 240), qui entoure la douille intérieure (40; 140; 240), qui est fixée à celle-ci en direction axiale et qui fixe la saillie (42) contre un soulèvement imprévu hors de la gorge périphérique (24),
**caractérisé en ce que** la douille intérieure (40; 140; 240) est réalisée comme un élément séparé de la pièce de raccordement (30; 130; 230) et du tube (20; 120; 220) et **en ce qu'**il est prévu, avec la douille intérieure (40; 140; 240) ou/et la douille extérieure (50; 150; 250), des moyens d'encliquetage coopérants (60; 160; 260), qui s'accrochent derrière l'épaulement annulaire (36; 136; 236) de la pièce de raccordement (30; 130; 230) sur le côté éloigné du tube (20; 120; 220).

2. Dispositif de raccordement selon la revendication 1, **caractérisé en ce que** la douille intérieure (40; 140; 240) ou/et la douille extérieure (50; 150; 250) s'étend ou s'étendent de façon continue, au moins partiellement, sur toute la périphérie.

3. Dispositif de raccordement selon la revendication 1 ou 2, **caractérisé en ce que** la saillie (42) est disposée sur l'extrémité libre d'une patte (44; 144; 244a), qui est logée de préférence dans une fenêtre (46; 146) de la douille intérieure (40; 140; 240).

4. Dispositif de raccordement selon l'une quelconque des revendications précédentes, **caractérisé en ce qu'**il est prévu, entre la partie essentiellement cylindrique creuse (32; 132; 232) de la pièce de raccordement (30; 130; 230) et le tube (20; 120; 220), une douille d'étanchéité (70; 170; 270), qui présente de préférence une bride annulaire (76) sur son extrémité axiale sortant hors du tube (20; 120; 220).

5. Dispositif de raccordement selon l'une quelconque des revendications précédentes, **caractérisé en ce que** la douille extérieure (50; 150; 250) présente, à une extrémité longitudinale, une bride (52) saillante radialement vers l'intérieur, qui délimite une ouverture (54) qui permet une introduction de l'épaulement annulaire (36; 136; 236) de la pièce de raccordement (30; 130; 230) mais empêche l'introduction d'une partie de tête (38) de la pièce de raccordement (30; 130; 230).

6. Dispositif de raccordement selon l'une quelconque des revendications précédentes, **caractérisé en ce que** les moyens d'encliquetage (60) comprennent au moins un ergot d'encliquetage (49) façonné d'une seule pièce sur la douille intérieure (40).

7. Dispositif de raccordement selon la revendication 6, **caractérisé en ce que** ledit au moins un ergot d'encliquetage (49) est relié à un corps de base (48) de la douille intérieure (40) au moyen d'une nervure élastiquement déformable (41, 45).

8. Dispositif de raccordement selon la revendication 6 ou 7, **caractérisé en ce qu'**au moins un élément de poussoir (43) est relié audit au moins un ergot d'encliquetage (49) par au moins une nervure périphérique (45), qui est réalisée et disposée de telle manière qu'une pression radiale vers l'intérieur sur ledit au moins un élément de poussoir (43) conduise à un mouvement radial vers l'extérieur dudit au moins un ergot d'encliquetage (49).

9. Dispositif de raccordement selon la revendication 8, **caractérisé en ce que** ledit au moins un élément de poussoir (43) sort de la douille extérieure (50) à travers une fenêtre associée (56) de celle-ci.

10. Dispositif de raccordement selon l'une quelconque des revendications 1 à 5, **caractérisé en ce que** les moyens d'encliquetage (160; 260) comprennent au moins une saille de retenue (182; 282) formée sur un élément de retenue séparé (180; 280).

11. Dispositif de raccordement selon la revendication 10, **caractérisé en ce que** l'élément de retenue (180; 280) présente en direction axiale une première partie, essentiellement rigide (184; 284), qui vient en prise par emboîtement avec la pièce de raccordement (130; 230) et porte ladite au moins une saillie de retenue (182; 282), ainsi qu'une deuxième partie (186; 286) réalisée comme un élément de ressort, qui sert pour la fixation de l'élément de retenue (180; 280) sur la douille extérieure (150; 250).

12. Dispositif de raccordement selon la revendication 10 ou 11, **caractérisé en ce que** la douille extérieure (150; 250) comprend une première fenêtre (156a; 256a), à travers laquelle l'élément de retenue (180; 280) avec ses nervures latérales (187; 287), de préférence de la partie (186; 286) de l'élément de retenue (180; 280) réalisée comme un élément de ressort, est introduit en tête, ainsi qu'au moins une deuxième fenêtre (156b; 256b), hors de laquelle ou desquelles sortent de nouveau les extrémités des nervures latérales (187; 287) de l'élément de retenue (180; 280).

13. Dispositif de raccordement selon la revendication 12, **caractérisé en ce qu'**il est prévu sur les deux nervures latérales (187) des moyens (181; 281) saillants vers l'intérieur, au moyen desquels l'élément de retenue (180; 280) s'accroche derrière au moins une saillie (158; 257b) de la douille extérieure (150; 250).

14. Dispositif de raccordement selon la revendication 12 ou 13, **caractérisé en ce qu'**il est prévu sur les deux nervures latérales (187; 287) respectivement une butée extérieure (183; 287d), qui empêche une séparation imprévue de l'élément de retenue (180; 280) hors de la douille extérieure (150; 250).

15. Dispositif de raccordement selon l'une quelconque des revendications précédentes, **caractérisé en ce qu'**il est prévu sur la douille extérieure (250) et sur l'élément de retenue (280) des moyens de guidage coopérants (257a, 289), qui s'étendent de préférence dans une direction (H) essentiellement orthogonale aussi bien à la direction transversale (Q) qu'à la direction axiale (A) de la douille extérieure (250).
